Europäisches Patentamt

(19) European Patent Office

Office européen des brevets

(11) EP 0 782 369 A2

(12) **EUROPEAN PATENT APPLICATION**

(43) Date of publication:
02.07.1997 Bulletin 1997/27

(51) Int. Cl.$^6$: **H04R 5/02**, H04R 3/12, H04R 5/04

(21) Application number: 96120939.2

(22) Date of filing: 27.12.1996

(84) Designated Contracting States:
DE FR GB

(30) Priority: 30.12.1995 KR 9568321

(71) Applicant: **HYUNDAI MOTOR COMPANY**
Jongro-ku, Seoul 110-270 (KR)

(72) Inventor: **Jung, Ho Geun**
Namyang-myun, Hwasung-kun, Kyungki-do (KR)

(74) Representative: **Viering, Jentschura & Partner**
Postfach 22 14 43
80504 München (DE)

(54) **Method and apparatus for controlling the output level of the loudspeakers in a vehicle**

(57) According to the method and apparatus for controlling the output level of each speaker in a vehicle audio system the position (3,3A,3B,3C) of each vehicle occupant is detected. Then, the output level setting for each speaker (2,2A,2B,3C) in the vehicle audio system is determined based on the detected position of each vehicle occupant, and each speaker in the vehicle audio system is controlled to achieve the output level setting determined therefor to optimize the listening conditions for each vehicle occupant.

*FIG. 4*

EP 0 782 369 A2

## Description

## BACKGROUND OF THE INVENTION

### 1. Field of the Invention

The present invention relates to a method and apparatus for controlling the magnitude of speakers in a vehicle; and more particularly, to controlling the magnitude of the speakers to optimize listening conditions for the vehicle's occupants.

### 2. Description of Related Art

Most vehicles include an audio system for the listening pleasure of the driver and any passengers. Typically, such an audio system includes speakers disposed in the front left, front right, back left, and back right areas of the occupant portion of the vehicle. The audio system includes user manipulated controls by which the magnitude of the output from the speakers can be manually controlled. The output magnitude from each speaker remains fixed regardless of the number or position of the passengers within the vehicle, and usually only optimizes the listening pleasure of the individual manipulating the audio system's manual controls.

## SUMMARY OF THE INVENTION

It is an object of the present invention to provide a method and apparatus for controlling the magnitude of the speakers in a vehicle which optimizes the listening conditions for the occupants of the vehicle.

These and other objectives are achieved by providing a method for controlling a magnitude of each speaker in a vehicle audio system, comprising: (a) detecting a position of each vehicle occupant; (b) determining a magnitude setting for each speaker in said vehicle audio system based on said detected position of each vehicle occupant; and (c) controlling each speaker in said vehicle audio system to achieve said magnitude setting determined therefor.

These and other objectives are further achieved by providing an apparatus for controlling a magnitude of each speaker in a vehicle audio system, comprising: sensing means for detecting a position of each vehicle occupant; determining means for determining a magnitude setting for each speaker in said vehicle audio system based on said detected position of each vehicle occupant; and control means for controlling each speaker in said vehicle audio system to achieve said magnitude setting determined therefor.

Further scope of applicability of the present invention will become apparent from the detailed description given hereinafter. However, it should be understood that the detailed description and specific examples, while indicating preferred embodiments of the invention, are given by way of illustration only, since various changes and modifications within the spirit and scope of the invention will become apparent to those skilled in the art from this detailed description.

## BRIEF DESCRIPTION OF THE DRAWINGS

The present invention will become more fully understood from the detailed description given hereinbelow and the accompanying drawings which are given by way of illustration only, and thus, are not limitative of the present invention, and wherein:

Fig. 1 illustrates the distance relationship between the speakers in a vehicle and the driver of the vehicle;

Fig. 2 illustrates the equidistant technique for establishing the sound center when the vehicle contains more than two occupants;

Fig. 3 illustrates the centroid technique for establishing the sound center when the vehicle contains more than three occupants;

Fig. 4 illustrates the arrangement of speakers, seats, and occupant sensors within a car body;

Fig. 5 illustrates the apparatus for controlling the magnitude of speakers in a vehicle according to the present invention; and

Fig. 6 illustrates the method for controlling the magnitude of speakers in a vehicle according to the present invention.

## DETAILED DESCRIPTION OF THE PREFERRED EMBODIMENT

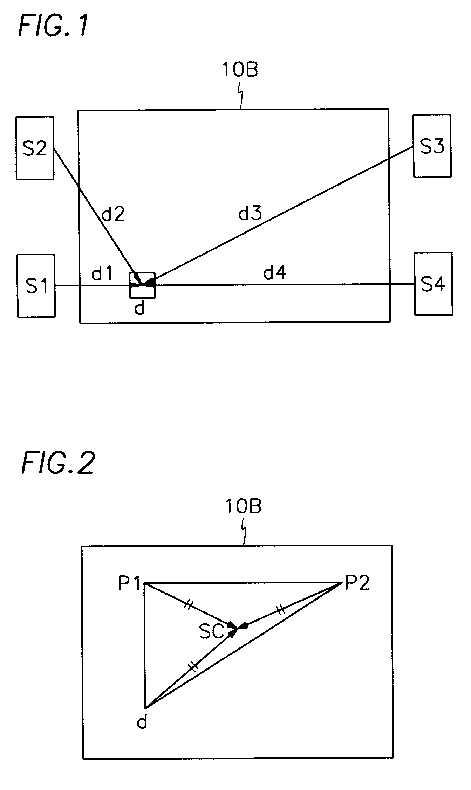

As the distance between a sound source and an individual decreases, the greater that individual perceives the output magnitude of the sound source. The same relationship replies with respect to the speakers in a vehicle and the occupants of the vehicle. Referring to Fig. 1, Fig. 1 illustrates the occupant portion 10b of a vehicle. Speakers S1 and S2 are disposed on the driver side and passenger side, respectively, of the front portion of the vehicle, while speakers S3 and S4 are disposed on the passenger side and driver side, respectively, of the rear portion of the vehicle. As shown in Fig. 1, the distance between a driver at point d and speakers S1, S2, S3 and S4 is $d_1$, $d_2$, $d_3$, and $d_4$, respectively, with $d_1 > d_2 > d_4 > d_3$. Consequently, if the magnitude of output from the speakers S1-S4 is the same, the driver at point d will perceive that speaker S1 has the greatest output magnitude, speaker S2 has the next greatest output magnitude, speaker S4 has the next greatest output magnitude, and speaker S3 has the lowest output magnitude.

The perceived difference in output magnitude from the speakers is a function of the distance between the speakers and the vehicle occupant. As compared with speaker S1, the driver at point d perceives speaker S2 as having a magnitude of $d_1/d_2$ times the perceived output magnitude of the speaker S1.

Assuming the magnitude of output from speakers S1-S4 is M1-M4, respectively, the driver at point d will perceive M1=M2=M3=M4 when the output magnitudes of the speakers S1-S4 have the relationship shown below in expression (1).

$$M2 = \gamma\, M1 \qquad (1)$$

$$M3 = \beta\, M1$$

$$M4 = \alpha\, M1$$

where $\alpha = d_4 \backslash d_1$, $\beta = d_3 \backslash d_1$, and $\gamma = d_2 \backslash d_1$

By setting the output magnitude of the speakers S1-S4 in accordance with expression (1) above, a driver at point d will perceive that each of the speakers S1-S4 has the same output magnitude; thus, optimizing the listening conditions for the driver at point d.

The point d where the output magnitudes of the speakers S1-S4 are perceived to be equal is referred to as the sound center SC. When, the vehicle has only one occupant, it is possible to establish the sound center SC at the occupant's position.

When more than one person occupies the vehicle, it is not possible to set the output magnitudes of the speakers S1-S4 such that each person perceives that the output magnitudes of the speakers S1-S4 are equal. Instead, the listening conditions for all occupants is optimized by choosing a sound center SC between the occupants. For instance, when the vehicle has two occupants, the sound center SC is the midpoint of a line connecting those two occupants.

When the vehicle contains more than two occupants, the sound center SC may be established using two different techniques. The first technique is the equidistant technique illustrated in Fig. 2. As shown in Fig. 2, the vehicle occupant portion 10b includes three occupants positioned at points d, $P_1$ and $P_2$. The sound center SC is chosen as a point which lies within a polygon established by connecting the positions of each occupant, and which is equidistant from each occupant. As shown in Fig. 2, the sound center SC lies within the triangle formed by connecting the occupant positions d, $P_1$ and $P_2$, and is the point within this triangle wherein the distances between point d and the sound center SC, the point $P_1$ and the sound center SC, and the point $P_2$ and the sound center SC are all equal.

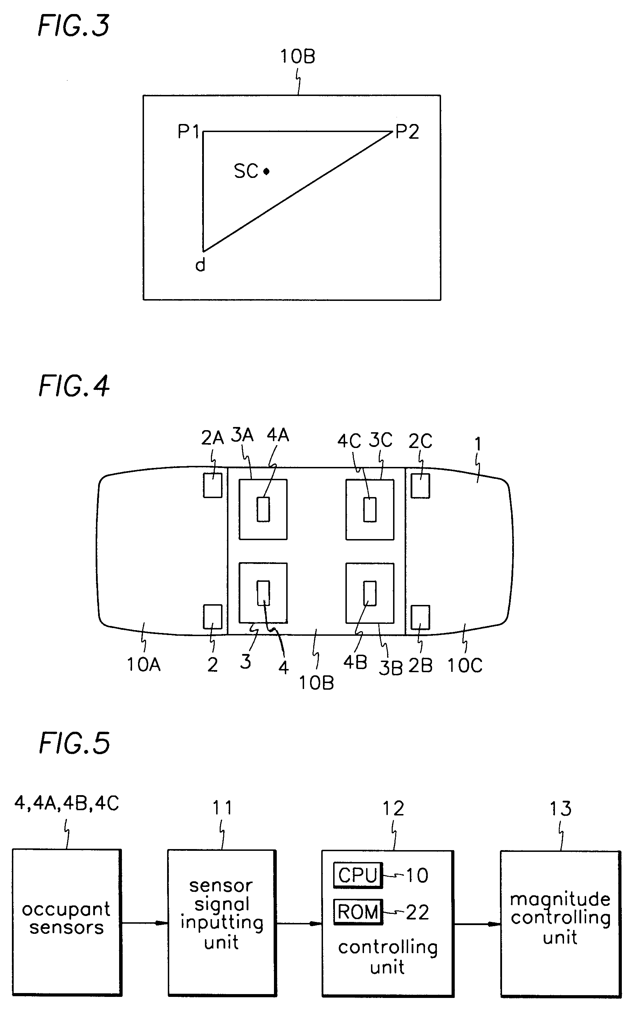

The second technique for establishing the sound center when there are more than two vehicle occupants is called the centroid technique. In the centroid technique, the sound center SC is chosen as the centroid of a polygon formed by connecting the position of each vehicle occupant. Fig. 3 illustrates the centroid technique for establishing the sound center SC when the vehicle contains occupants at positions d, $P_1$ and $P_2$. Assuming that the triangle obtained by connecting the occupant positions d, $P_1$ and $P_2$ has constant density, the center of mass of this triangle, the centroid, is chosen as the sound center SC.

Once the sound center SC is established, the distances between each of the speakers S1-S4 and the sound center SC are measured. Based on expression (1) discussed above, the perceived output magnitudes from each of the speakers S1-S4 can be equalized at the sound center SC.

The structure and operation of the present invention will now be discussed with reference to Figures 4-6. Fig. 4 illustrates a car body 1 having a front portion 10a, an occupant portion 10b, and a back portion 10c. The occupant portion 10b includes four seats 3, 3A, 3B and 3C. Each seat 3-3C has an occupant sensor 4-4C associated therewith. The car body 1 further includes two speakers 2 and 2A disposed in the front portion on the driver and passenger sides, respectively, and also includes two speakers 2B and 2C in the back portion 10c on the driver and passenger sides, respectively. While the car body 1 to which the present invention has been applied includes only 4 seats, the number of seats can be increased or decreased with a corresponding increase or decrease in the occupant sensors associated with each seat. Likewise, the number and position of the speakers can be varied.

The occupant sensors 4-4C sense whether a person is occupying a corresponding one of the seats 3-3C. As the occupant sensors 4-4C, a thermal sensor (e.g. infra-red sensor) disposed above each seat is used in one embodiment of the present invention. The present invention, however, is not limited to using thermal sensors as the occupant sensors 4-4C. Instead, any type of occupant sensor such as a pressure sensor disposed within each of the seats 3-3C can be used.

Fig. 5 illustrates the apparatus for controlling the magnitude of the speakers of a vehicle according to the present invention. As shown, the apparatus includes the occupant sensors 4-4C which are connected to a sensor signal input unit 11. The system further includes a controlling unit 12 which receives the output of the sensor signal inputting unit 11, a manual control system 14, and a manual\automatic selector 15. A magnitude controlling unit 13 receives the output from the controlling unit 12. As further shown in Fig. 5, the controlling unit 12 includes a CPU 20 connected to a ROM 22.

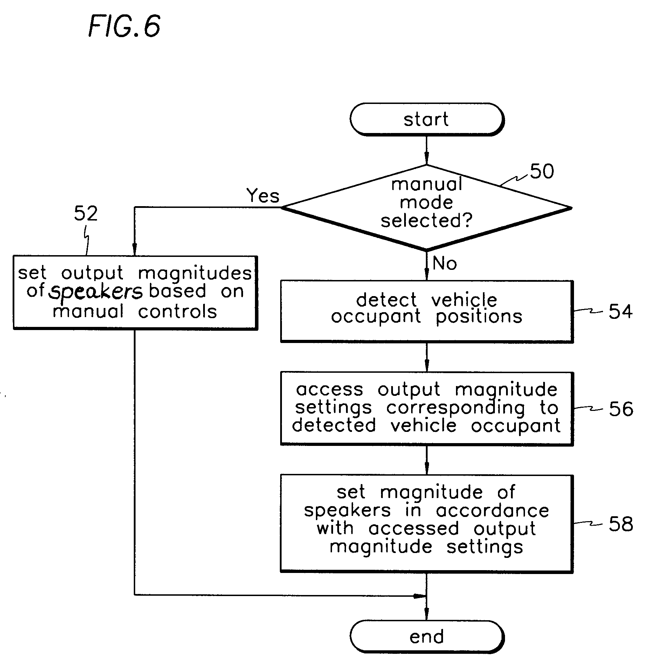

The operation of the apparatus for controlling the magnitude of the speakers of a vehicle will now be discussed with respect to Fig. 6. At the beginning of operation in step 50, the CPU 20 of the controlling unit 12 determines whether the manual\automatic selector 15 has been set by an operator to manual mode or automatic mode. If the manual mode has been set, then processing proceeds to step 52. In step 52, the controlling unit 12 will generate the output magnitudes of the speakers 2-2A based on manual manipulation of the manual control system 14. After step 50, the control method according to the present invention ends.

If in step 50, the CPU 20 determines that the automatic mode has been selected, then processing proceeds to step 54. In step 54, the sensor signal inputting unit 11 inputs the output from the occupant sensors 4-4C. The sensor signal inputting unit 11 determines the position of the vehicle occupants in the occupant portion 10b based on the output of the occupant sensors 4-4C. The sensor signal inputting unit 11 then outputs the occupant positions to the controlling unit 12. Next, in step 56, the CPU 20 accesses from ROM 22 the output magnitude settings for the speakers 2-2C based on the occupant positions.

Because all the possible numbers and positions of occupants are known when the vehicle is manufactured, the sound center SC for all possible numbers and positions of occupants are predetermined. The magnitude settings for each predetermined sound center SC are also predetermined in accordance with expression (1) discussed above. As a result, the output magnitude settings for the speakers 2-2C are predetermined for each possible set of occupant positions, and these predetermined output magnitude settings are stored in the ROM 22.

After step 56, processing proceeds to step 58 wherein the CPU 20 outputs the accessed output magnitude settings for the speakers 2-2C to the magnitude controlling unit 13. The magnitude controlling unit 13 then sets the magnitude of the speakers 2-2C in accordance with the output magnitude settings received from the controlling unit 12. In this manner, the listening conditions within the occupant portion 10b of the car body 1 are optimized based on the number and position of the vehicle occupants.

The invention being thus described, it will be obvious that the same may be varied in many ways. Such variations are not to be regarded as a departure from the spirit and scope of the invention, and all such modifications as would be obvious to one skilled in the art are intended to be included within the scope of the following claims.

## Claims

1. A method for controlling a magnitude of each speaker in a vehicle audio system, comprising:

    (a) detecting a position of each vehicle occupant;
    (b) determining a magnitude setting for each speaker in said vehicle audio system based on said detected position of each vehicle occupant; and
    (c) controlling each speaker in said vehicle audio system to achieve said magnitude setting determined therefor.

2. The method of claim 1, wherein said step (b) determines said magnitude setting for each speaker which optimizes listening conditions for each vehicle occupant.

3. The method of claim 1, wherein said step (b) includes the substeps of:

    (b1) establishing a sound center based on said detected position of each vehicle occupant; and
    (b2) determining said magnitude setting for each speaker such that a magnitude of sound from each speaker at said sound center is substantially equal.

4. The method of claim 3, wherein said step (b1) determines said sound center as a point equidistant from said detected position of each vehicle occupant.

5. The method of claim 3, wherein said step (b1) determines said sound center as a centroid of a polygon formed by connecting said detected position of each vehicle occupant.

6. The method of claim 1, wherein said step (a) detects a position of each vehicle occupant using thermal sensors.

7. The method of claim 1, wherein said step (a) detects a position of each vehicle occupant using a thermal sensor positioned above each seat in said vehicle.

8. The method of claim 1, wherein said step (a) detects whether each seat of said vehicle has an occupant using a pressure sensing device in each seat.

9. The method of claim 1, further comprising:

    (d) selecting one of a manual setting mode and an automatic setting mode, and wherein said step (c) sets a magnitude of each speaker based on said magnitude setting determined therefor when said step (d) selects said automatic setting mode, and sets said magnitude of each speaker in accordance with manual operation of manual controls when said step (d) selects said manual setting mode.

10. An apparatus for controlling a magnitude of each speaker in a vehicle audio system, comprising:

    sensing means for detecting a position of each vehicle occupant;
    determining means for determining a magnitude setting for each speaker in said vehicle audio system based on said detected position of each vehicle occupant; and
    control means for controlling each speaker in said vehicle audio system to achieve said magnitude setting determined therefor.

11. The apparatus of claim 10, wherein said determining means determines said magnitude setting for each speaker which optimizes listening conditions for each vehicle occupant.

12. The apparatus of claim 10, wherein said determining means establishes a sound center based on said detected position of each vehicle occupant, and determines said magnitude setting for each speaker such that a magnitude of sound from each speaker at said sound center is substantially equal.

13. The apparatus of claim 12, wherein said determining means determines said sound center as a point equidistant from said detected position of each vehicle occupant.

14. The apparatus of claim 12, wherein said determining means determines said sound center as a centroid of a polygon formed by connecting said detected position of each vehicle occupant.

15. The apparatus of claim 10, wherein said sensing means includes a plurality of thermal sensors.

16. The apparatus of claim 15, wherein each of said thermal sensors is positioned above each seat in said vehicle.

17. The apparatus of claim 10, wherein said sensing means includes a pressure sensing device in each seat of said vehicle.

18. The apparatus of claim 10, further comprising:

selecting means for selecting one of a manual setting mode and an automatic setting mode; and wherein said control means sets a magnitude of each speaker based on said magnitude setting determined therefor when said selecting means selects said automatic setting mode, and sets said magnitude of each speaker in accordance with manual operation of manual controls when said selecting means selects said manual setting mode.

FIG.1

FIG.2

## FIG.3

## FIG.4

## FIG.5

## FIG.6

```
                    ┌──────────┐
                    │  start   │
                    └────┬─────┘
                         │
              Yes    ╱───┴────╲
         ┌──────────╱  manual  ╲──── 50
         │          ╲  mode    ╱
         │           ╲selected?╱
  ┌──────┴──────┐     ╲───┬───╱
  │ 52          │         │ No
  │set output   │    ┌────┴─────────────┐
  │magnitudes   │    │ detect vehicle   │── 54
  │of speakers  │    │ occupant positions│
  │based on     │    └────────┬─────────┘
  │manual       │             │
  │controls     │    ┌────────┴─────────┐
  └──────┬──────┘    │ access output    │── 56
         │           │ magnitude settings│
         │           │ corresponding to  │
         │           │ detected vehicle  │
         │           │ occupant          │
         │           └────────┬─────────┘
         │                    │
         │           ┌────────┴─────────┐
         │           │ set magnitude of │── 58
         │           │ speakers in      │
         │           │ accordance with  │
         │           │ accessed output  │
         │           │ magnitude settings│
         │           └────────┬─────────┘
         │                    │
         └─────────┬──────────┘
               ┌───┴────┐
               │  end   │
               └────────┘
```